# EUROPEAN PATENT APPLICATION

(11) **EP 4 289 709 A1**
(43) Date of publication of application: **13.12.2023**
(21) Application number: 23176354.1
(22) Date of filing: 31.05.2023
(51) Int. Cl.: B62D 25/08, B62D 25/20

(54) **VEHICLE AND VEHICLE BODY FRONT ENGINE COMPARTMENT FRAMEWORK THEREOF**

(30) Priority: 06.06.2022 CN 202210633681
(71) Applicant: Nio Technology (Anhui) Co., Ltd, Hefei City, Anhui 230601 (CN)
(72) Inventor: YANG, Chuanyi, Jiading Shanghai (CN)
(74) Representative: Vossius & Partner Patentanwälte Rechtsanwälte mbB

(57) **Abstract**

The disclosure relates to the technical field of vehicle body structures, and in particular provides a vehicle and a vehicle body front engine compartment framework (100) thereof, the vehicle body front engine compartment framework comprising: two front longitudinal beams (1a,1b); a front longitudinal beam rear section member (2) arranged between the two front longitudinal beams (1a,1b); and a cross beam (3) located behind the front longitudinal beam rear section member (2) in a length direction of the vehicle, wherein the front longitudinal beam rear section member (2) comprises a base part (20), and a first part (21) and a second part (22) which are located on two sides of the base part (20) in a width direction of the vehicle, and the base part (20) is connected to the cross beam (3); and at least some of the base part (20), the first part (21) and the second part (22) are of an integrally-formed structure. With such a configuration, a structural form of the vehicle body front engine compartment framework (100) is provided. Moreover, for the front longitudinal beam rear section member (2), since difficulties in the manufacture of different parts themselves and in matching between components are reduced, the product consistency is improved.

## Description

### Technical Field

The disclosure relates to the technical field of vehicle body structures, and in particular, to a vehicle and a vehicle body front engine compartment framework thereof.

### Background Art

An electric vehicle among vehicles is provided with a traction battery as a power source, and the traction battery is usually arranged on a vehicle body floor of the vehicle. For a vehicle body structure of the electric vehicle, for example, Chinese utility model patent (CN 213974175 U) discloses a front longitudinal beam rear section casting structure for a vehicle, and specifically discloses the following content:
the front longitudinal beam rear section casting structure comprises a first casting structure 1 and a second casting structure 2, wherein the first casting structure has a relatively large dimension, and the second casting structure has a relatively small dimension; the second casting structure 2 is fixed to one side of the first casting structure 1 by means of a bolt, and a lower inner A-pillar plate 3 is fixed to the other side of the first casting structure 1 by means of a bolt and is rigidly connected to and abuts against the first casting structure 1, so as to transmit collision energy; the lower inner A-pillar plate 3 and a sill longitudinal beam 7 form an integrated structure, and a front longitudinal beam 4 is of a cuboid structure; the first casting structure 1 and the second casting structure 2 are both fixedly connected to the front longitudinal beam 4 by means of bolts; and the first casting structure 1 further comprises a sill longitudinal beam matching portion 16, wherein the sill longitudinal beam matching portion 16 is integrally formed with the first casting structure 1, and is in bolted connection, flow drill screw (FDS) connection or self-piercing riveting (SPR) connection with the sill longitudinal beam 7 and abuts against the sill longitudinal beam, so as to transmit the collision energy from the front longitudinal beam 4 to the sill longitudinal beam 7.

It can be seen that the front longitudinal beam rear section casting structure in this document comprises a plurality of structures, and thus necessarily comprises connections between different components, and such a structure increases difficulties in manufacturing matching of components themselves and in matching between different components. Moreover, since different components are connected, there is a problem of decrease of collision energy efficiency when a plurality of components having a connection relationship transmit collision energy on a path from the front longitudinal beam to the sill longitudinal beam of the vehicle.

Accordingly, there is a need for a new technical solution to solve the problem described above.

### Summary

### Technical Problem

The disclosure is proposed in order to solve the technical problem described above at least to some extent.

### Technical Solution

In view of this, in a first aspect of the disclosure, a vehicle body front engine compartment framework of a vehicle is provided, the vehicle body front engine compartment framework comprising: two front longitudinal beams; a front longitudinal beam rear section member arranged between two longitudinal front beams; and a cross beam located behind the front longitudinal beam rear section member in a length direction of the vehicle, wherein the front longitudinal beam rear section member comprises a base part, and a first part and a second part which are located on two sides of the base part in a width direction of the vehicle, and the base part is connected to the cross beam; and at least some of the base part, the first part and the second part are of an integrally-formed structure.

With such a configuration, a structural form of the vehicle body front engine compartment framework is provided.

For the front longitudinal beam rear section member, since difficulties in the manufacture of different parts themselves and in matching between components are reduced, the product consistency is improved. Moreover, since at least some parts involve an integrated forming process, connection processes such as bolts and gluing introduced for connections between components in a non-integrated forming process are omitted, and the production efficiency is improved while the device investment is reduced.

It can be understood that those skilled in the art can integrally form some or all of the structures according to actual needs. As an example, viewed in a height direction (a Z direction) of the vehicle, the front longitudinal beam rear section member comprises two parts vertically separately arranged; and in the width direction of the vehicle (viewed in a Y direction), the base part, the first part and the second part included in each of the parts are of an integrally-formed structure. That is, each of the base part, the first part and the second part comprises two members, an upper group (3 members) of the members is of an integrated structure, and the two groups of members are connected to each other.

For the above vehicle body front engine compartment framework of a vehicle, in a possible implementation, the vehicle is provided with a traction battery, and the traction battery is arranged on the base part at a position close to a lower part in the height direction of the vehicle; the vehicle body front engine compartment framework comprises a connecting unit, the base part is connected to the cross beam by means of the connecting unit; and in an assembled state, the connecting unit is located above the base part in the height direction of the vehicle.

With such a configuration, a specific structural form in which the vehicle body front engine compartment framework is composed of the front longitudinal beam rear section member provided.

For the above vehicle body front engine compartment framework of a vehicle, in a possible implementation, the connecting unit comprises a plurality of connecting components arranged in the length direction of the vehicle, and the base part is connected to the cross beam by means of the plurality of connecting components.

With such a configuration, a structural form of the connecting unit is provided. Since the traction battery is arranged below a vehicle bottom plate, the height of the connecting component in the Z direction of the vehicle is limited, and the overall cross-sectional strength of the connecting component is weakened. In view of this, in the disclosure, the plurality of connecting components are used to support the force transmission.

It can be understood that those skilled in the art can determine the structural form and number of connecting parts and a connection relationship between each connecting part and the cross beam according to the actual needs. As an example, the structure of the connecting part is generally a sled board, and three sled boards are provided.

For the above vehicle body front engine compartment framework of a vehicle, in a possible implementation, at least some of the plurality of connecting parts have different dimensions in the width direction of the vehicle.

With such a configuration, a specific association mode of the plurality of connecting parts is provided.

Still taking an example in which the structure of the connecting component is generally a sled board and three sled boards are provided as described above, for example, the sled board in the middle has a width greater than that of each of the sled boards on two sides. In addition, the material of the sled board, the thickness of the material and the dimension of the outline of the sled board in the height direction of the vehicle may also be adjusted, for example, the material may be selected as aluminum or thermoformed steel, etc. according to the requirements of collision force transmission.

For the above vehicle body front engine compartment framework of a vehicle, in a possible implementation, the vehicle body front engine compartment framework comprises: two rocker panels corresponding to the two front longitudinal beams, wherein on one hand, the first part/second part is connected to the rocker panel on a corresponding side in the width direction of the vehicle, and on the other hand, the first part/second part is connected to the rocker panel on a corresponding side in the length direction of the vehicle.

With such a configuration, a specific connection mode between the front longitudinal beam rear section member and the rocker panels on two sides is provided.

For the above vehicle body front engine compartment framework of a vehicle, in a possible implementation, the vehicle body front engine compartment framework comprises a foot plate, wherein on one hand, the foot plate is connected to the rocker panel on a corresponding side in the height direction of the vehicle, and on the other hand, the foot plate is connected to the first part/second part on a corresponding side in the height direction of the vehicle.

With such a configuration, a specific connection mode between the front longitudinal beam rear section member and the foot plate is provided.

For the above vehicle body front engine compartment framework of a vehicle, in a possible implementation, the vehicle body front engine compartment framework further comprises: two lower inner A-pillar plates corresponding to the two front longitudinal beams, wherein the first part/second part is connected to the lower inner A-pillar plate on a corresponding side.

With such a configuration, a specific structural form of the vehicle body front engine compartment framework is provided.

For the above vehicle body front engine compartment framework of a vehicle, in a possible implementation, the vehicle body front engine compartment framework comprises: two supporting members corresponding to the two front longitudinal beams, wherein each of the supporting members covers at least a part of an outer side of the front longitudinal beam on a corresponding side, and the front longitudinal beam is connected to the first part/second part on a corresponding side by means of the supporting member.

With such a configuration, a specific connection form of the vehicle body front engine compartment framework is provided.

For the above vehicle body front engine compartment framework of a vehicle, in a possible implementation, each of the supporting members is connected to the first part/second part on a corresponding side in the length direction and the width direction of the vehicle, respectively.

With such a configuration, a specific connection form which is realized by the vehicle body front engine compartment framework by means of the supporting members is provided.

For the above vehicle body front engine compartment framework of a vehicle, in a possible implementation, each of the supporting members comprises a supporting body, the supporting body is fixedly connected to the front longitudinal beam on a corresponding side and the first part/second part on a corresponding side, and reinforcing ribs are provided on the supporting body.

With such a configuration, a specific structural form of the supporting member is provided.

For the above vehicle body front engine compartment framework of a vehicle, in a possible implementation, the base part, the first part and the second part are an integrally-formed casting.

With such a configuration, a specific structural form of the front longitudinal beam rear section member is provided.

Specifically, with such a structural form, difficulties in the manufacture of different components (for example, one of which is a cast part and another of which is an aluminum extruded part) themselves and in matching between the components are reduced, and the product consistency is improved.

For the above vehicle body front engine compartment framework of a vehicle, in a possible implementation, the casting is made of C611 aluminum alloy free from heat treatment.

The strength of an aluminum alloy high-pressure casting can be improved after heat treatment. However, in the disclosure, the C611 aluminum alloy material free from heat treatment is used to design the front longitudinal beam rear section member with an integrated structure, which is very rare in the industry. In principle, the strength of C611 aluminum alloy free from heat treatment is obviously lower than that of heat-treated AlSi₁₀MgMn aluminum alloy. However, in the disclosure, designing separate structures as an integrally-formed structure combined with a rib position design, etc., mentioned below, enables an expected structural strength and a collision safety goal while the strength is reduced in theory. That is, a low-strength material is used to obtain a structure whose structural strength and collision safety goal meet the standard.

Candidate materials to be verified also includes SF37, HB-1, etc.

For the above vehicle body front engine compartment framework of a vehicle, in a possible implementation, the front longitudinal beam rear section member is provided with a rib assembly on a side thereof close to the cross beam, and the rib assembly comprises first ribs extending generally in the width direction of the vehicle and second ribs forming an included angle with the first ribs.

With such a configuration, a structural form of the rib assembly is provided.

Taking an example in which the front longitudinal beam rear section member is an integrally-formed casting, the provision of the first ribs can increase lateral stiffness of the front longitudinal beam rear section member, thereby effectively preventing the casting from fracturing during a vehicle collision. Moreover, such a rib orientation can ensure that energy can be effectively transmitted to the rocker panels on the two sides in the case of a vehicle collision. The provision of the second ribs increases the ability of the front longitudinal beam rear section member to resist torsional deformation in the Z direction when the front longitudinal beam rear section member is impacted due to the vehicle collision.

For the above vehicle body front engine compartment framework of a vehicle, in a possible implementation, each of the second ribs comprises a plurality of sections, wherein viewed in the height direction of the vehicle, the second ribs of different sections that correspond to the same width direction are continuously or discontinuously arranged; and/or viewed in the height direction of the vehicle, an included angle is formed between at least some of the plurality of second ribs corresponding to the same width direction.

With such a configuration, a structural form of the second ribs in the rib assembly is provided.

In a second aspect of the disclosure, a vehicle is provided, the vehicle comprising a front longitudinal beam rear section member according to any one of the foregoing implementations.

It can be understood that the vehicle has all the technical effects of a vehicle body front engine compartment framework of a vehicle according to any one of the foregoing implementations, which will not be described in detail herein again.

Proposal 1. A vehicle body front engine compartment framework of a vehicle, comprising:
two front longitudinal beams;
a front longitudinal beam rear section member arranged between the two front longitudinal beams; and
a cross beam located behind the front longitudinal beam rear section member in a length direction of the vehicle,
wherein the front longitudinal beam rear section member comprises a base part, and a first part and a second part which are located on two sides of the base part in a width direction of the vehicle, and the base part is connected to the cross beam; and
at least some of the base part, the first part and the second part are of an integrally-formed structure.

Proposal 2. The vehicle body front engine compartment framework of a vehicle according to proposal 1, wherein the vehicle is provided with a traction battery, and the traction battery is arranged on the base part at a position close to a lower part in a height direction of the vehicle,
the vehicle body front engine compartment framework comprises a connecting unit, and the base part is connected to the cross beam by means of the connecting unit, and
in an assembled state, the connecting unit is located above the base part in the height direction of the vehicle.

Proposal 3. The vehicle body front engine compartment framework of a vehicle according to proposal 2, wherein the connecting unit comprises a plurality of connecting components arranged in the length direction of the vehicle, and the base part is connected to the cross beam by means of the plurality of connecting components.

Proposal 4. The vehicle body front engine compartment framework of a vehicle according to proposal 3, wherein at least some of the plurality of connecting components have different dimensions in the width direction of the vehicle.

Proposal 5. The vehicle body front engine compartment framework of a vehicle according to proposal 1, comprising:
two rocker panels corresponding to the two front longitudinal beams,
wherein on one hand, the first part/second part is connected to the rocker panel on a corresponding side in the width direction of the vehicle, and on the other hand, the first part/second part is connected to the rocker panel on a corresponding side in the length direction of the vehicle.

Proposal 6. The vehicle body front engine compartment framework of a vehicle according to proposal 5, comprising:
a foot plate,
wherein on one hand, the foot plate is connected to the rocker panel on a corresponding side in the height direction of the vehicle, and on the other hand, the foot plate is connected to the first part/second part on a corresponding side in the height direction of the vehicle.

Proposal 7. The vehicle body front engine compartment framework of a vehicle according to proposal 1, further comprising:
two lower inner A-pillar plates corresponding to the two front longitudinal beams,
wherein the first part/second part is connected to the lower inner A-pillar plate on a corresponding side.

Proposal 8. The vehicle body front engine compartment framework of a vehicle according to proposal 1, comprising:
two supporting members corresponding to the two front longitudinal beams,
wherein each of the supporting members covers at least a part of an outer side of the front longitudinal beam on a corresponding side, and the front longitudinal beam is connected to the first part/second part on a corresponding side by means of the supporting member.

Proposal 9. The vehicle body front engine compartment framework of a vehicle according to proposal 8, wherein each of the supporting members is connected to the first part/second part on a corresponding side in the length direction and the width direction of the vehicle, respectively.

Proposal 10. The vehicle body front engine compartment framework of a vehicle according to proposal 8, wherein each of the supporting members comprises a supporting body, the supporting body is fixedly connected to the front longitudinal beam on a corresponding side and the first part/second part on a corresponding side, and reinforcing ribs are provided on the supporting body.

Proposal 11. The vehicle body front engine compartment framework of a vehicle according to proposal 1, wherein the base part, the first part and the second part are an integrally-formed casting.

Proposal 12. The vehicle body front engine compartment framework of a vehicle according to proposal 11, wherein the casting is made of C611 aluminum alloy free from heat treatment.

Proposal 13. The vehicle body front engine compartment framework of a vehicle according to proposal 1, wherein the front longitudinal beam rear section member is provided with a rib assembly on a side thereof close to the cross beam, and the rib assembly comprises first ribs extending generally in the width direction of the vehicle and second ribs forming an included angle with the first ribs.

Proposal 14. The vehicle body front engine compartment framework of a vehicle according to proposal 13, wherein each of the second ribs comprise a plurality of sections,
and wherein viewed in the height direction of the vehicle, the second ribs of different sections that correspond to the same width direction are continuously or discontinuously arranged; and/or
viewed in the height direction of the vehicle, an included angle is formed between at least some of the plurality of second ribs that correspond to the same width direction.

Proposal 15. A vehicle, comprising a vehicle body front engine compartment framework of a vehicle according to any one of proposals 1 to 14.

### Brief Description of the Drawings

A vehicle body front engine compartment framework of a vehicle according to the disclosure is described below with reference to the accompanying drawings. In the accompanying drawings:
FIG. 1 shows a first schematic structural diagram (top view) of a vehicle body front engine compartment framework of a vehicle according to an embodiment of the disclosure;
FIG. 2 shows a second schematic structural diagram (perspective view) of a vehicle body front engine compartment framework of a vehicle according to an embodiment of the disclosure;
FIG. 3 shows a schematic diagram of a force transmission path of a vehicle body front engine compartment framework of a vehicle according to an embodiment of the disclosure in the case of a collision;
FIG. 4 shows a schematic structural diagram of a connecting unit in a vehicle body front engine compartment framework of a vehicle according to an embodiment of the disclosure;
FIG. 5 shows a schematic diagram of a connection relationship between a front longitudinal beam rear section member and a rocker panel and a foot plate in a vehicle body front engine compartment framework of a vehicle according to an embodiment of the disclosure;
FIG. 6 shows a schematic structural diagram of a bracket for connecting a front longitudinal beam rear section member to a rocker panel in a vehicle body front engine compartment framework of a vehicle according to an embodiment of the disclosure;
FIG. 7 shows a schematic diagram of a connection relationship between a front longitudinal beam rear section member and a lower inner A-pillar plate and a rocker panel in a vehicle body front engine compartment framework of a vehicle according to an embodiment of the disclosure;
FIG. 8 shows a schematic diagram of a connection relationship between a front longitudinal beam rear section member and a front longitudinal beam in a vehicle body front engine compartment framework of a vehicle according to an embodiment of the disclosure;
FIG. 9 shows a first schematic structural diagram (rear side view) of a front longitudinal beam rear section member in a vehicle body front engine compartment framework of a vehicle according to an embodiment of the disclosure; and
FIG. 10 shows a second schematic structural diagram (front side view) of a front longitudinal beam rear section member in a vehicle body front engine compartment framework of a vehicle according to an embodiment of the disclosure.

### List of reference signs

100. Vehicle body front engine compartment frame;
1((a), (b)). Front longitudinal beam;
2. Front longitudinal beam rear section member; 20. Base part; 21. First part; 22. Second part; 231. First rib; 232. Second rib;
3. Cross beam;
4. Connecting unit; 41. First connecting component; 410. Recess; 411. First protrusion; 412. Second protrusion; 42. Second connecting component; 43. Third connecting component;
5. Bracket; 51. First protruding end; 511. Connector a; 52. Second protruding end; 521. Connector b; 53. Connector c;
6. Foot plate; 61. Connector d; 62. Connector e; 63. Connector f;
7((a), (b)). Lower inner A-pillar plate; 71. Connector g;
8((a), (b)). Rocker panel; 81. Connector h; 82. Connector i;
9. Supporting member; 91. First vertical part; 911. Connector j; 92. Second vertical part; 921. Connector k; 93. Third vertical part; 931. Connector 1; 94. Reinforcing rib.

### Detailed Description of Embodiments

Preferred implementations of the disclosure are described below with reference to the accompanying drawings. Those skilled in the art should understand that these implementations are only used to explain the technical principles of the disclosure, and are not intended to limit the scope of protection of the disclosure.

It should be noted that in the description of the disclosure, the terms, such as "center", "upper", "lower", "left", "right", "vertical", "horizontal", "inner" and "outer", that indicate directions or positional relationships are based on the directions or positional relationships shown in the accompanying drawings only for convenience of description, and do not indicate or imply that the device or element must have a specific orientation, be constructed and operated in a specific orientation, and therefore cannot be construed as limitation to the disclosure. In addition, the terms "first", "second", and "third" are for descriptive purposes only, and may not be interpreted as indicating or implying relative importance. The terms "a/an" and "this" in the singular form may also include the plural form.

In addition, for better description of the disclosure, many details are provided in the following specific implementations, and those skilled in the art should understand that, without some specific details, the disclosure can still be implemented. In some examples, casting processing methods, etc. that are well known to those skilled in the art are not described in detail in order to highlight the gist of the disclosure.

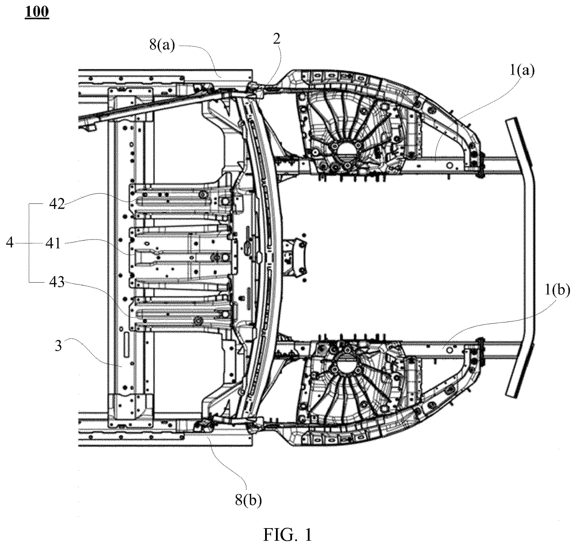

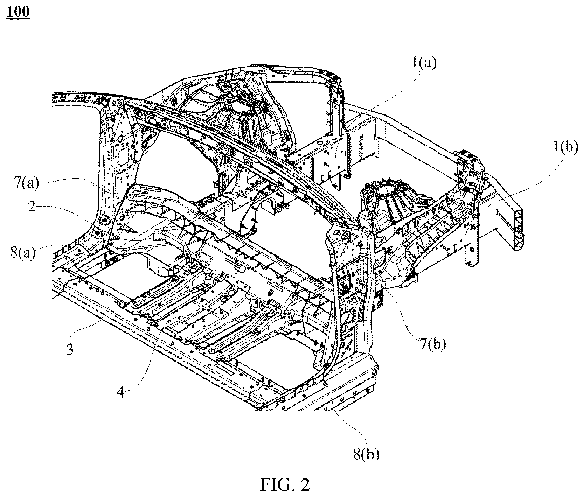

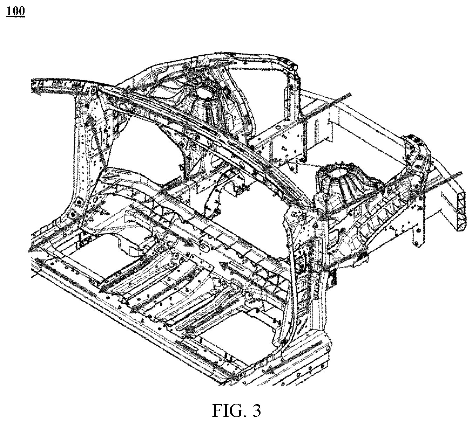

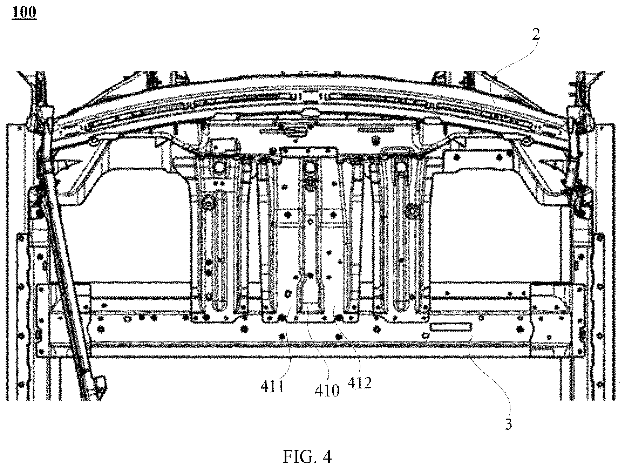

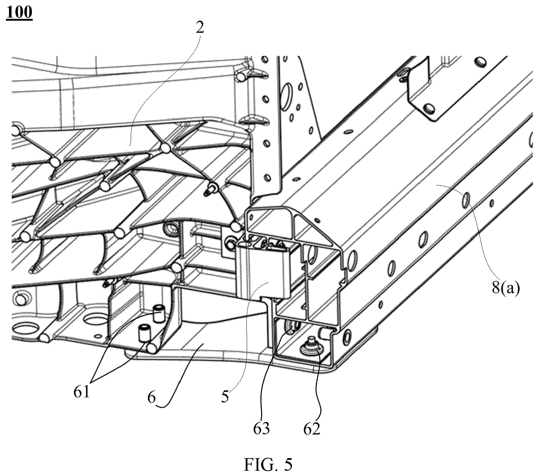

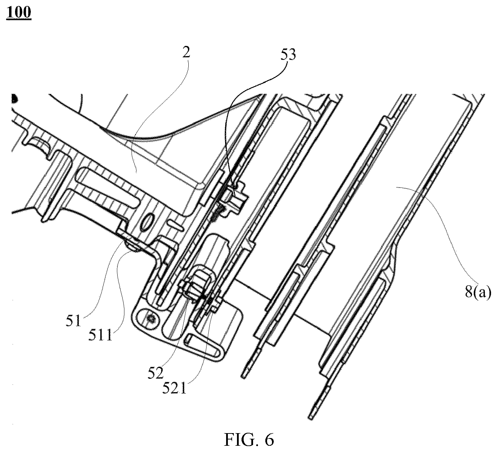

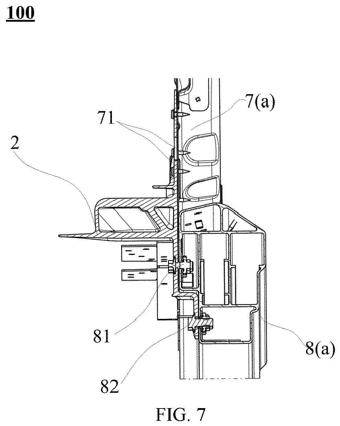

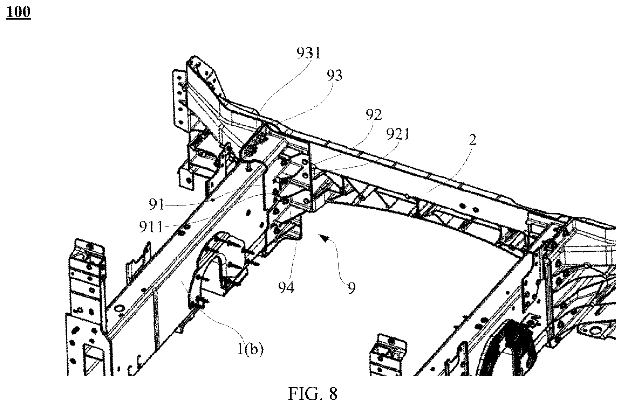

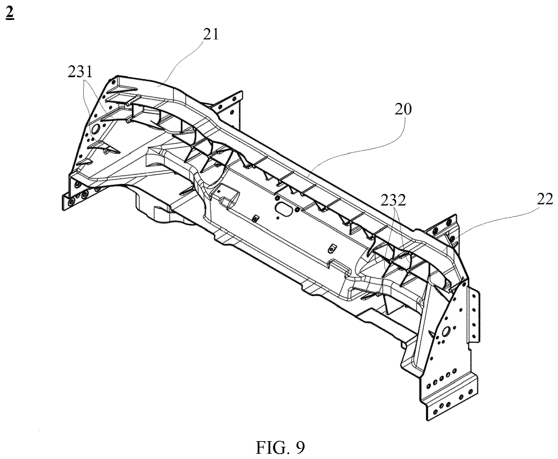

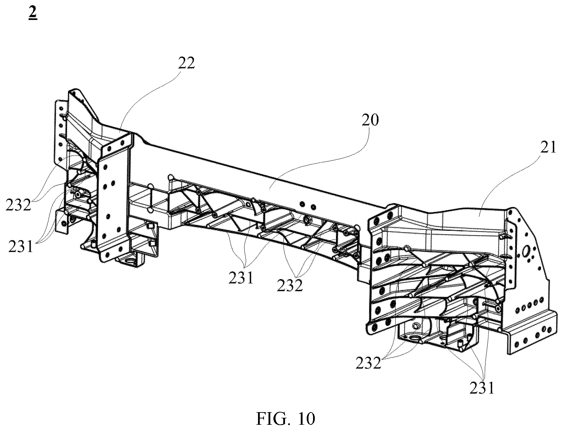

Referring to FIGS. 1 to 10, FIG. 1 shows a first schematic structural diagram of a vehicle body front engine compartment framework of a vehicle according to an embodiment of the disclosure; FIG. 2 shows a second schematic structural diagram of a vehicle body front engine compartment framework of a vehicle according to an embodiment of the disclosure; FIG. 3 shows a schematic diagram of a force transmission path of a vehicle body front engine compartment framework of a vehicle according to an embodiment of the disclosure in the case of a collision; FIG. 4 shows a schematic structural diagram of a connecting unit in a vehicle body front engine compartment framework of a vehicle according to an embodiment of the disclosure; FIG. 5 shows a schematic diagram of a connection relationship between a front longitudinal beam rear section member and a rocker panel and a foot plate in a vehicle body front engine compartment framework of a vehicle according to an embodiment of the disclosure; FIG. 6 shows a schematic structural diagram of a bracket for connecting a front longitudinal beam rear section member to a rocker panel in a vehicle body front engine compartment framework of a vehicle according to an embodiment of the disclosure; FIG. 7 shows a schematic diagram of a connection relationship between a front longitudinal beam rear section member and a lower inner A-pillar plate and as a rocker panel in a vehicle body front engine compartment framework of a vehicle according to an embodiment of the disclosure; FIG. 8 shows a schematic diagram of a connection relationship between a front longitudinal beam rear section member and a front longitudinal beam in a vehicle body front engine compartment framework of a vehicle according to an embodiment of the disclosure; FIG. 9 shows a first schematic structural diagram of a front longitudinal beam rear section member in a vehicle body front engine compartment framework of a vehicle according to an embodiment of the disclosure; and FIG. 10 shows a second schematic structural diagram of a front longitudinal beam rear section member in a vehicle body front engine compartment framework of a vehicle according to an embodiment of the disclosure.

Referring mainly to FIGS. 1 to 3 and 9 to 10, in a possible implementation, a vehicle body front engine compartment framework 100 of a vehicle mainly comprises a front anti-collision beam (not marked), two front longitudinal beams separately arranged in a left-right manner (respectively denoted as 1(a) and 1(b)), a front longitudinal beam rear section member 2, a cross beam 3, two lower inner A-pillar plates (respectively denoted as 7(a) and 7(b)) corresponding to the two front longitudinal beams, and rocker panels (respectively denoted as 8(a) and 8(b)), wherein the front longitudinal beam rear section member and the cross beam are arranged between the two front longitudinal beams, and the cross beam is located behind the front longitudinal beam rear section member. In this example, each of the front anti-collision beam, the front longitudinal beams and the rocker panels is an aluminum extruded part. The front longitudinal beam rear section member 2 comprises a central base part 20, and a first part 21 and a second part 22 which are located on two sides of the base part. In particular, in the disclosure, the base part, the first part and the second part are an integrally-formed casting, and the casting is made of C611 aluminum alloy free from heat treatment. In this way, a 6000-series material used for the front longitudinal beams absorbs energy, and the front longitudinal beam rear section member 2 as a large integrally-formed casting thus has good lateral stiffness and force transmission effect. On this basis, it is expected to sufficiently firmly transmit the energy generated during a vehicle collision.

For the front longitudinal beam rear section member 2, since difficulties in the manufacture of different parts themselves and in matching between parts are reduced, the product consistency is improved. Moreover, since at least some parts involve an integrated forming process, connection processes such as bolts and gluing introduced for connections between components in a non-integrated forming process are omitted, and therefore, the production efficiency is improved while the device investment is reduced.

Referring mainly to FIGS. 1 to 4, in a possible implementation, the base part of the front longitudinal beam rear section member 2 is connected to the cross beam by means of a connecting unit 4. Specifically, the vehicle is further provided with a traction battery (not shown) as its power source, the traction battery is arranged on the base part at a position close to a lower part, and the base part is connected to the cross beam by means of the connecting unit located above the base part. Since the traction battery is arranged below a vehicle bottom plate, the height of the connecting component in a Z direction of the vehicle is limited, and the overall cross-sectional strength of the connecting component is weakened. In view of this, the connecting unit in the disclosure comprises a plurality of separately arranged connecting components to reliably support the force transmission.

In a possible implementation, three connecting components are provided, and are denoted as a first connecting component 41, a second connecting component 42 and a third connecting component 43, wherein the second connecting component 42 and the third connecting component 43 are located on two sides of the first connecting component 41, the widths of the second connecting component 42 and the third connecting component 43 are slightly less than the width of the first connecting component 41, and the base part of the front longitudinal beam rear section member 2 is connected to the cross beam 3 by means of the connecting components (41, 42, 43).

As an example, the structures of the three connecting components are generally the same, and specifically, are each generally the structure of a sled board. Taking the first connecting component 41 as an example, the sled board comprises a central recess 410, and a first protrusion 411 and a second protrusion 412 which extend outward from the recess. In addition, the three connecting components may be made of the same material or different materials. For example, in this example, the first connecting component 41 in the middle is an aluminum stamped part, and the connecting components (42, 43) on the two sides are made of DP800 high-strength steel.

In a possible implementation, on one hand, the first part/second part of the front longitudinal beam rear section member 2 is connected to the rocker panel on a corresponding side in a width direction of the vehicle, and on the other hand, the first part/second part of the front longitudinal beam rear section member 2 is connected to the rocker panel on a corresponding side in a length direction of the vehicle. Hereinafter, description will be made mainly with reference to FIGS. 5 to 7.

As an example, the vehicle body front engine compartment framework is provided with a bracket 5 for connection. For example, the bracket is an aluminum extruded part. The bracket has two protruding ends. According to a direction shown in FIG. 6, a first protruding end 51 is a protruding end that protrudes along a left side and that is of a sheet structure, and a second protruding end 52 is a protruding end located on a right side of the first protruding end and extending in the length direction of the vehicle. As an example, the second protruding end is generally of a structure in the shape of Chinese character " 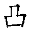 ", and the first protruding end is of a bent structure protruding from a left side edge of the structure in the shape of Chinese character " 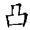 ". By means of a connector a 511, the first protruding end 51 is connected to a front side wall of the first part of the front longitudinal beam rear section member 2 in the length direction of the vehicle; and by means of a connector b 521, the second protruding end 52 is connected to the rocker panel 8(a) in the width direction of the vehicle. In addition, the first part is also directly connected to the rocker panel 8(a) in the width direction of the vehicle by means of a connector c 53.

In this example, a foot plate 6 of the vehicle is connected to the first part of the front longitudinal beam rear section member 2 in a height direction of the vehicle by means of two connectors d 61, the foot plate 6 is also connected to the rocker panel 8(a) in the height direction of the vehicle by means of a connector e 62, and the rocker panel (a) is connected to the first part of the front longitudinal beam rear section member 2 in the width direction of the vehicle by means of a connector f 63.

In addition, the first part/second part of the front longitudinal beam rear section member 2 is connected to the lower inner A-pillar plate on a corresponding side by means of a connector g 71, and the first part/second part of the front longitudinal beam rear section member 2 is also directly connected to the rocker panel on a corresponding side by means of a connector h 81 and a connector i 82. In addition, in this example, the lower inner A-pillar plate is made of high-strength steel DP600.

Referring mainly to FIG. 8, in a possible implementation, the vehicle body front engine compartment framework is provided with supporting members 9 for connection function, and the supporting member mainly implements the connection between the front longitudinal beam and the first part/second part of the front longitudinal beam rear section member 2 on a corresponding side. In this example, the supporting member covers a part of an outer wall surface of the front longitudinal beam 1(b) on a corresponding side close to the inner side, and is attached to the second part of the front longitudinal beam rear section member 2 on a corresponding side in the width direction and the length direction of the vehicle, respectively. As an example, the supporting member 9 forms, between the front longitudinal beam 1(b) and the second part, a generally L-shaped bend serving as a supporting body of the supporting member. The bend comprises a first vertical part 91 corresponding to the front longitudinal beam 1(b) and a second vertical part 92 corresponding to the second part of the front longitudinal beam rear section member 2, wherein the first vertical part 91 is connected to the front longitudinal beam 1(b) by means of a connector j 911, and a third vertical part 93 extends from an upper part of the first vertical part 91. The second vertical part 92 is connected to the second part of the front longitudinal beam rear section member 2 in the length direction of the vehicle by means of a connector k 921, and the third vertical part 93 is connected to the second part of the front longitudinal beam rear section member 2 in the width direction of the vehicle by means of a connector 1 931. In this example, a plurality of plate-shaped reinforcing ribs 94 for improving the strength of the bend are added at a bent part of the bend.

Referring mainly to FIGS. 9 to 10, in a possible implementation, rib assemblies are arranged on two sides of the front longitudinal beam rear section member, wherein the rib assembly comprises first ribs 231 extending generally in the width direction of the vehicle (the first ribs extending generally horizontally) and second ribs 232 forming an included angle with the first ribs. For example, each of the first rib and the second rib may comprise a plurality of sections. Especially for the second ribs in the rib assembly, viewed in the height direction of the vehicle, the second ribs of different sections that correspond to the same width direction may be continuously or discontinuously arranged and/or an included angle is formed between at least some of the plurality of second ribs that correspond to the same width direction.

It should be noted that the formation of the included angle herein should be interpreted as that the plurality of second ribs have an obvious direction change in an extension trend. For example, it may be the following case: a straight line in one direction changes to a straight line in another direction; a straight line changes to a curve; a curve of a trend changes to a curve in another direction; and so on.

The provision of the first ribs 231 can increase lateral stiffness of the front longitudinal beam rear section member 2, thereby effectively preventing the casting from fracturing during a vehicle collision. Moreover, such a rib orientation can ensure that energy can be effectively transmitted to the rocker panels on the two sides in the case of a vehicle collision. The provision of the second ribs 232 increases the ability of the front longitudinal beam rear section member to resist torsional deformation in the Z direction when the front longitudinal beam rear section member is impacted due to the vehicle collision.

On this premise, those skilled in the art can combine the integrally-formed front longitudinal beam rear section member of C611 aluminum alloy free from heat treatment with the rib position design including the first ribs and the second ribs, so that the vehicle body front engine compartment framework can meet the expected structural strength and a collision safety goal.

Based on the above structure, for a force transmission path of the vehicle body front engine compartment framework according to the disclosure in the case of a vehicle collision, reference may be made to FIG. 3. As shown in FIG. 3, since the front longitudinal beam rear section member 2 is of a structure with no inconsistent interference in material, structure and rib position, after energy generated during a vehicle collision is transmitted to the front longitudinal beam rear section member by means of the front longitudinal beams on the two sides, in the first aspect, the energy is directly transmitted to the rocker panel on a corresponding side by means of the first part/second part on the outer side; in the second aspect, the energy is transmitted to the lower inner A-pillar plate on a corresponding side by means of the first part/second part on the outer side and then dispersed to an upper bracket of the vehicle body front engine compartment framework; and in the third aspect, the energy is transmitted to the central base part by means of the first part/second part on the outer side, further transmitted to the cross beam by means of the three sled boards (that is, the connecting components (41, 42, 43)), and then transmitted from the cross beam to the rocker panels on the two sides.

It can be seen that in the vehicle body front engine compartment framework according to the disclosure, when the front longitudinal beam rear section member is subjected to a direct impact, the energy in areas on two sides is transmitted mainly by means of the rocker panel on a corresponding side, and the energy in a central area is transmitted to the cross beam by means of the three sled boards, so that requirements for small overlap crash at 56 km/h FFB, 64 km/h ODB, 25% 64 km/h, etc. can be met. Based on the structural design including the new front longitudinal beam rear section member, the vehicle body front engine compartment framework according to the disclosure re-plans a force transmission path after a vehicle collision, so that the structure is more stable, and the energy transmission efficiency after the collision is higher. Experiments prove that, especially in a 25% small overlap crash test, the vehicle body front engine compartment framework according to the disclosure can obviously resist the impact of a wheel hub.

Heretofore, the technical solutions of the disclosure have been described with reference to the preferred implementations shown in the accompanying drawings. However, those skilled in the art can readily understand that the scope of protection of the disclosure is apparently not limited to these specific implementations. Those skilled in the art may make equivalent changes or substitutions to the related technical features without departing from the principle of the disclosure, and all the technical solutions with such changes or substitutions shall fall within the scope of protection of the disclosure.

## Claims

1. A vehicle body front engine compartment framework of a vehicle, comprising:
two front longitudinal beams;
a front longitudinal beam rear section member arranged between the two front longitudinal beams; and
a cross beam located behind the front longitudinal beam rear section member in a length direction of the vehicle,
wherein the front longitudinal beam rear section member comprises a base part, and a first part and a second part which are located on two sides of the base part in a width direction of the vehicle, and the base part is connected to the cross beam; and
at least some of the base part, the first part and the second part are of an integrally-formed structure.

2. The vehicle body front engine compartment framework of a vehicle according to claim 1, wherein the vehicle is provided with a traction battery, and the traction battery is arranged on the base part at a position close to a lower part in a height direction of the vehicle,
the vehicle body front engine compartment framework comprises a connecting unit, and the base part is connected to the cross beam by means of the connecting unit, and
in an assembled state, the connecting unit is located above the base part in the height direction of the vehicle.

3. The vehicle body front engine compartment framework of a vehicle according to claim 2, wherein the connecting unit comprises a plurality of connecting components arranged in the length direction of the vehicle, and the base part is connected to the cross beam by means of the plurality of connecting components.

4. The vehicle body front engine compartment framework of a vehicle according to claim 3, wherein at least some of the plurality of connecting components have different dimensions in the width direction of the vehicle.

5. The vehicle body front engine compartment framework of a vehicle according to any of claims 1 to 4, comprising:
two rocker panels corresponding to the two front longitudinal beams,
wherein on one hand, the first part/second part is connected to the rocker panel on a corresponding side in the width direction of the vehicle, and on the other hand, the first part/second part is connected to the rocker panel on a corresponding side in the length direction of the vehicle.

6. The vehicle body front engine compartment framework of a vehicle according to claim 5, comprising:
a foot plate,
wherein on one hand, the foot plate is connected to the rocker panel on a corresponding side in the height direction of the vehicle, and on the other hand, the foot plate is connected to the first part/second part on a corresponding side in the height direction of the vehicle.

7. The vehicle body front engine compartment framework of a vehicle according to any of claims 1 to 6, further comprising:
two lower inner A-pillar plates corresponding to the two front longitudinal beams,
wherein the first part/second part is connected to the lower inner A-pillar plate on a corresponding side.

8. The vehicle body front engine compartment framework of a vehicle according to any of claims 1 to 7, comprising:
two supporting members corresponding to the two front longitudinal beams,
wherein each of the supporting members covers at least a part of an outer side of the front longitudinal beam on a corresponding side, and the front longitudinal beam is connected to the first part/second part on a corresponding side by means of the supporting member.

9. The vehicle body front engine compartment framework of a vehicle according to claim 8, wherein each of the supporting members is connected to the first part/second part on a corresponding side in the length direction and the width direction of the vehicle, respectively.

10. The vehicle body front engine compartment framework of a vehicle according to claim 8 or 9, wherein each of the supporting members comprises a supporting body, the supporting body is fixedly connected to the front longitudinal beam on a corresponding side and the first part/second part on a corresponding side, and reinforcing ribs are provided on the supporting body.

11. The vehicle body front engine compartment framework of a vehicle according to any of claims 1 to 10, wherein the base part, the first part and the second part are an integrally-formed casting.

12. The vehicle body front engine compartment framework of a vehicle according to claim 11, wherein the casting is made of C611 aluminum alloy free from heat treatment.

13. The vehicle body front engine compartment framework of a vehicle according to any of claims 1 to 12, wherein the front longitudinal beam rear section member is provided with a rib assembly on a side thereof close to the cross beam, and the rib assembly comprises first ribs extending generally in the width direction of the vehicle and second ribs forming an included angle with the first ribs.

14. The vehicle body front engine compartment framework of a vehicle according to claim 13, wherein each of the second ribs comprise a plurality of sections,
and wherein viewed in the height direction of the vehicle, the second ribs of different sections that correspond to the same width direction are continuously or discontinuously arranged; and/or
viewed in the height direction of the vehicle, an included angle is formed between at least some of the plurality of second ribs that correspond to the same width direction.

15. A vehicle, comprising a vehicle body front engine compartment framework of a vehicle according to any one of claims 1 to 14.
